# EUROPEAN PATENT SPECIFICATION

(11) **EP 3 743 562 B1**
(45) Date of publication and mention of the grant of the patent: **03.01.2024**
(21) Application number: 18899031.1
(22) Date of filing: 06.11.2018
(51) Int. Cl.: E02B 3/10

(54) **A FLUID FILLED DAM**
FLÜSSIGKEITSGEFÜLLTER DAMM
BARRAGE REMPLI DE FLUIDE

(30) Priority: 24.01.2018 DK PA201870047
(43) Date of publication of application: 02.12.2020
(73) Proprietor: Barrier Systems Udvikling, 2791 Dragør (DK)
(72) Inventor: SØRENSEN, Allan, 100 Tórshavn (FO)
(74) Representative: Guardian IP Consulting I/S
(86) International application number: PCT/DK2018/050285
(87) International publication number: WO 2019/145001

(56) References cited:
- WO-A1-01/71101
- CN-A- 106 012 966
- DE-U1- 20 309 206
- US-A- 5 971 661
- US-A1- 2013 108 372
- US-A1- 2017 051 464
- US-B1- 6 334 736

## Description

### The prior art:

The present invention relates to a dam for the shielding of water, the dam comprising at least one elongate tubular section having a substantially uniform circumference, the tubular section defining a closed volume enclosed by at least a longitudinal tube extending between two end faces all made from a waterproof web material, the at least one elongate tubular section comprising one or more openings arranged in the waterproof web material, and being configured for filling and emptying of liquid to the volume, and where the elongate tubular section has multiple fasteners arranged substantially equidistantly on the outside of the tubular section along a first line extending between the two end faces in the longitudinal direction of the tubular section.. Dams of the above mentioned type are known in different embodiments and one such example is known from US patent application no. 2017051464. These types of dams are mostly used for efficient protection against flooding in places where such flooding only rarely happens, making it advantageous to use mobile dams that are easy to install and remove when needed as an alternative to permanent installations.

DE utility model no. 20309206 and CN patent application no. 106012966 discloses a water filled dam with a triangular cross section. The dam has a first and a second end and a hole arranged at the first end for the purpose of pumping water into the dam. The above mentioned CN document furthermore discloses that the dam has fasteners arranged at the ends so that two such dams can be interconnected in each other's extension having the second end of one dam section abutting the first end of the next dam section.

Furthermore each dam has side flanges and a top flange adapted for securing the dams sections to the ground or to a supporting structure.

US patent no. 5971661 discloses water filled dam sections having a triangular cross section and a number of valves arranged at one end of the dam section for filling water into it. The dam section has two planar structural elements arranged for keeping two sides of the triangular shaped dam planar. The dam sections are stackable and thereby allowing the construction of a higher dam.

In general dams of the above mentioned types can be arranged in each other's extension and they are very useful for establishing dam constructions of varying lengths on a substantially planar ground

### The object of the invention:

On this background it is the purpose of the present invention to provide a low cost dam of the above mentioned type, being easy to deploy, and at the same time providing flexibility with respect to building different dams suitable for different locations and flooding situations, and especially for providing the construction of dams on very uneven or sloping grounds.

According to the invention this is obtained by providing a dam according to claim 1 and in particular as mentioned in the introduction, and where the elongate tubular section has multiple fasteners arranged substantially equidistantly on the outside of the tubular section along a first line extending between the two end faces in the longitudinal direction of the tubular section.

Thereby it is possible to easily install dams having varying lengths as well as different stability because of the option of building single row dams or double row dams where two single row dams are interconnected in parallel with each other via the multiple fasteners and with the individual dam section arranged in an overlapping pattern.

In a preferred embodiment the tubular section furthermore has multiple fasteners arranged substantially equidistantly on the outside of the tubular section along a second line extending substantially parallel with the first line between the two end faces and in the longitudinal direction of the tubular section, and so that the first and the second line divides the waterproof web material of the longitudinal tube into an upper face, and a substantially rectangular section bottom having its shortest side length being less than half, and preferably less than 40%, of the circumference of the longitudinal tube.

In another preferred embodiment multiple stiffening rods may be attached to the section bottom and extending between the first and the second line at different positions along the length of the tubular section.

An especially simple construction is obtained where at least some of the fasteners are fastening eyes.

In this relation it is advantageous if the fasteners along the at least one line are formed by one flange extending outwardly from the tubular section, and having the fastening eyes arranged equidistantly along the length of the tubular section.

In fact both the fasteners along the first and the second line may preferably be formed by one flange extending outwardly from the tubular section, and having fastening eyes arranged equidistantly along the length of the tubular section, and in this relation it is also advantageous if the tubular section further comprises a third flange arranged substantially parallel with the first and the second line, so that it divides the upper face into two longitudinal side faces each extending between the two end faces, and between the third flange and one of the flanges with fastening eyes.

Furthermore in another preferred embodiment other fasteners are arranged near each end face, and being adapted for fastening any end of one of said elongate tubular sections to any end of a second of said elongate tubular sections.

The other fasteners preferably comprises hook and loop fasteners.

In a preferred embodiment the dam comprises at least 3 separate elongate tubular sections, where a first and a second one of the elongate tubular sections are arranged so that the end face of the first one of the elongate tubular sections faces an end face of the second one of the elongate tubular sections, and where the third one of the elongate tubular sections are arranged so that it extends on one side of the first and the second elongate tubular sections.

In this relation the first and the second elongate tubular sections may preferably be mutually fastened to each other via the other fasteners arranged near each end face.

In this relation it is especially advantageous if the third elongate tubular section is arranged so that a first part of it extends in parallel with and along one side of the first elongate tubular section, and the remaining part of it extends in parallel with and along one side of the second elongate tubular section.

Furthermore the third elongate tubular section may advantageously be fastened to the first and the second elongated tubular sections respectively via the multiple fasteners arranged substantially equidistantly on the outside of each of the tubular sections along the first or the second line.

### The drawing:

In the following one or more embodiments of the invention will be described in more detail and with reference to the drawing, where:
Fig. 1: Is a principle drawing, showing the construction of a single dam section according to the invention.
Fig. 2: Is principle drawing showing a dam according to an embodiment of the invention with four interconnected dam sections as shown on figure 1.
Fig. 3: Is a principle drawing showing a cross section of a dam with one dam section according to figure 1 stacked on top of two other dam sections as shown on figure 1.

### Description of exemplary embodiments:

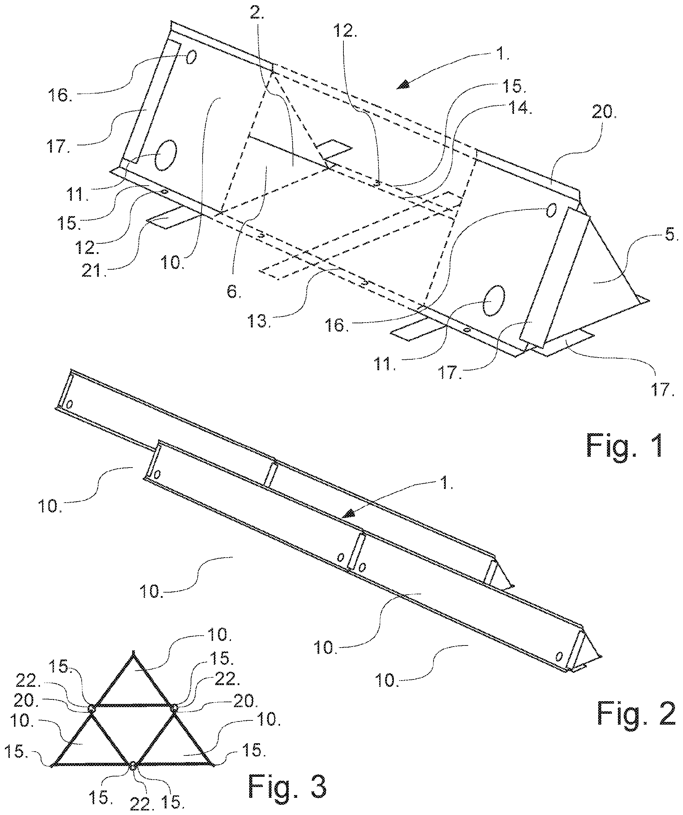

Fig. 1 is a principle sketch showing a dam 1 according to one embodiment of the present invention with one dam section formed with a triangular tube section 10 extending between end faces 5. The triangular tube section is made from a waterproof web material, and a set of apertures or openings 11 are arranged in the web material for the purpose of filling the dam section with water. According to the invention two such openings 11 are arranged so that one opening 11 is placed near one end of the dam 1, and the other opening 11 is arranged near the opposite end.

In this principle sketch these apertures 11 are shown only as holes in the web material forming the triangular tube section 10 as it is apparent to a skilled person to suggest many different solutions, such as valves, (fire)hose couplings, pumps and any other equipment allowing water to be flushed into the dam section via hoses and thereafter keeping the water in the dam section by blocking the openings 11, and for the same reason a set of pressure relief valves 16 are arranged near the top of the triangular tube, allowing quick flushing of water into the dam section without blowing the web material forming the triangular tube section. Thereby it is possible to first arrange a row of such dams on a sloping ground where an uppermost dam and a lowermost dam in the row of dams are interconnected via e.g. a fire hose extending from the opening near the lowermost end of the uppermost dam section arranged on the highest ground level, and to the opening arranged near the uppermost end of the lowermost dam section arranged on lower ground, and thereafter filling both dam sections via the opening arranged at the uppermost end of the first dam section. When the lowermost dam is filled the hose may be blocked or the hose removed and the openings blocked, so that continued filling of the uppermost dam does not result in further increase of the water pressure in the lowermost dam.

Thereby it is possible to first arrange multiple empty dam sections in a row extending downwardly on a sloping ground, and thereafter filling all the dams via the uppermost dam section, so that the lowermost dam section is filled first and thereafter it is disconnected from fluid connection with the other dam sections, and then the next lowermost dam section is filled and disconnected from the others, and so on.

In the principle sketch the mid-section of the dam 1 is illustrated using punctured lines in order to show the interior of this embodiment of the dam, and because the dam in preferred embodiments may be significantly longer with respect to its height and width shown in this principle sketch. In this relation it is evident that when the dam sections is filled with water and lying on the ground, then the side faces of the dam section will bulge due the weight and pressure of the water. The perfect triangular shape of the dam sections 10 shown in the figure is therefore just made to show the construction of the dam sections, and not the shape they may have when being used in practice.

The elongated tubular section 10 comprises in this embodiment a rectangular section bottom 2 and two longitudinal and rectangular side faces 4, and the section bottom 2 extends between the end faces 5 and the first and the second line 13, 14 with the first and the second flange 15 both extending parallel with each other in the longitudinal direction of the elongated triangular tube section 10.

On the top of the dam 1 a third flange 20 is provided for further stiffening the elongated tubular section 10, and so that the section bottom 2 and each of the two longitudinal sides faces 4 all has a width in a direction transverse to the longitudinal direction of the elongated tube 10, corresponding to about one third of the total circumference of the elongated tubular section 10, but it will be apparent that e.g. the section bottom may be broader than this in order to further stabilize the dam section.

In order to further stabilize the dam section the section bottom is in this embodiment provided with multiple stiffening rods 21 being firmly attached to the section bottom at different positions along the length of the dam section, and extending our from the section bottom and past the flanges 15. These stiffening rods 21 may be attached permanently or releasably attached to the section bottom at least near each of the flanges 15, or they may in a preferred embodiment be arranged in a channel extending in a transverse direction with respect to the longitudinal direction of the section bottom, and from the first flange 15 to the second one so that they provide a reinforcement flattening of the web material forming the section bottom. In this relation it will be evident for the skilled person that stiffeners or stiffening rods as mentioned above may be used for the same purpose on any type of dam construction using fluid or bulk as filling material.

For the purpose of providing an easy way of arranging two or more dam sections in each other's extension a set of hook and loop fasteners 17 are provided near the end faces 5. In the embodiment shown in figure 1 these hook and loop fasteners 17 are arranged identical at each end of the dam section and so that they can be attached to the fasteners 17 on any end of a similar dam section, but it will be apparent to the skilled person that the dam sections may also be mutually connected in each other's extension by means of any other releasable fasteners 17, such as ropes, hooks or zippers.

According to a preferred embodiment of the invention the first and the second flanges 15 are provided with fastening eyes 12 providing on the one hand the option of securing the dam section to the ground by means of e.g. earth pegs or other attachment means, but due to the fact that the fastening eyes 12 are arranged substantially equidistantly on the flanges, then they also allow that two, three or more such dam sections may be assembled to form a dam 1 as shown in figure 2, where the dam sections are arranged in two or more parallel rows, and where the dam sections in one row is attached to the dam section in a neighboring row via e.g. rope, shackles or hooks (not shown) being attached to the fastening eyes 12, and due to the fact that the dam section have approximately the same length, then it is easy to arrange the dams sections so that they overlap each other in such a way that the end faces of dam sections in one row are not aligned with the end faces on dam sections in another row. Thereby the complete dam 1 as shown e.g. in figure 2 is very stable against rolling down e.g. a sloping ground, and it can withstand a substantially higher water pressure than what a single row of dams can do.

Furthermore, for the purpose of constructing a higher dam where it is needed, it is possible to stack a dam section 10 on top of any of the two above mentioned dam sections 10 arranged in parallel rows. As shown in figure 3 this is done by arranging one dam section 10 so that each of the lowermost flanges 15 are attached to one of the uppermost flanges 20 on the two dam sections 10 arranged on the ground. In this situation the dam sections are attached to each other by means of shackles 22. In this way the uppermost dam section 10 will to a certain extend be "hanging" down between the two dam sections 10 resting on the ground, but due to the fact that the two dam sections on the ground are mutually attached to each other via the flanges 15, then the uppermost dam section will not fall in between the dam sections on the ground, and thereby the complete dam will be significantly higher than the dam shown on figure 2.

## Claims

1. A dam (1) for the shielding of water, the dam comprising at least one elongate tubular dam section (10) having a substantially uniform circumference, the tubular dam section (10) defining a closed volume (6) enclosed by at least a longitudinal tube extending between two end faces (5) all made from a waterproof web material, the at least one elongate tubular dam section (10) comprising an opening (11) arranged in the waterproof web material, and being configured for filling and emptying of liquid to the volume (6), and where the elongate tubular dam section (10) has multiple fasteners (12) arranged substantially equidistantly on the outside of the tubular section along a first line (13) extending between the two end faces (5) in the longitudinal direction of the tubular dam section (10), **characterized in, that** the tubular dam section (10) comprises at least two openings (11), and where one opening is arranged near one end face (5) of the tubular dam section (10) and the other opening (11) is arranged near the opposite end face (5) of the tubular dam section (10).

2. A dam according to claim 1, **characterized in, that** the tubular section (10) has multiple fasteners (12) arranged substantially equidistantly on the outside of the tubular section along a second line (14) extending substantially parallel with the first line between the two end faces (5) and in the longitudinal direction of the tubular section, and so that the first (13) and the second (14) line divides the waterproof web material of the longitudinal tube into an upper face, and a substantially rectangular section bottom (2) having its shortest side length being less than half, and preferably less than 40%, of the circumference of the longitudinal tube.

3. A dam according to claim 1 or 2, **characterized in, that** at least some of the fasteners are fastening eyes (12).

4. A dam according to claim 3, **characterized in, that** the fasteners along the at least one line are formed by one flange (15) extending outwardly from the tubular dam (10), and having the fastening eyes (12) arranged equidistantly along the length of the tubular section.

5. A dam according to claim 4, **characterized in, that** both the fasteners along the first and the second line each are formed by one flange (15) extending outwardly from the tubular section (10), and having fastening eyes (16) arranged equidistantly along the length of the tubular section, and where the tubular dam section (10) further comprises a third flange (20) arranged substantially parallel with the first and the second line, so that it divides the upper face into two longitudinal side faces (4) each extending between the two end faces (5), and between the third flange (20) and one of the flanges (15) with fastening eyes (12).

6. A dam according to claim 5, **characterized in, that** the third flange (20) also has fastening eyes (12) arranged equidistantly along the length of the tubular dam section (10).

7. A dam according to one or more of the preceding claims, **characterized in, that** other fasteners (17) are arranged near each end face, and being adapted for fastening any end of one of said elongate tubular sections (10) to any end of a second of said elongate tubular dam sections (10).

8. A dam according the claim 7, **characterized in, that** the other fasteners (17) comprises hook and loop fasteners.

9. A dam according to one or more of the preceding claims, **characterized in, that** it comprises at least 3 separate elongate tubular dam sections (10), and where a first and a second one of the elongate tubular dam sections (10) are arranged so that the end face of the first one of the elongate tubular sections faces an end face of the second one of the elongate tubular sections, and where the third one of the elongate tubular dam sections (10) are arranged so that it extends on one side of the first and the second elongate tubular dam sections (10).

10. A dam according to claim 7 and 9, **characterized in, that** the first and the second elongate tubular dam sections (10) are mutually fastened to each other via the other fasteners arranged near each end face.

11. A dam according to claim 9 or 10, **characterized in, that** the third elongate tubular dam section (10) is arranged so that a first part of it extends in parallel with and along one side of the first elongate tubular dam section (10), and the remaining part of it extends in parallel with and along one side of the second elongate tubular dam section (10).

12. A dam according to claim 11, **characterized in, that** the third elongate tubular section is fastened to the first and the second elongated tubular dam sections (10) respectively via the multiple fasteners (12) arranged substantially equidistantly on the outside of each of the tubular dam sections (10) along the first line (13) or the second line (14).

13. A dam according to one or more of the claim 6 through 8, **characterized in, that** it comprises at least a first and a second tubular dam section (10), and where the first tubular dam section (1) has a selected distance between its end faces (5), and the second tubular dam section (10) has a distance between its end faces (5) being at least 60% and preferably 100% longer than the corresponding distance between the end faces (5) of the first tubular dam section.

14. A dam according to claim 13, **characterized in, that** it further comprises a third tubular dam section (1) having a distance between its end faces (5) being at least 100% longer than the corresponding distance between the end faces (5) of the second tubular dam section.

15. A dam according to one or more of the claims 1 through 8, **characterized in, that** it comprises at least 3 separate elongate tubular dam sections (10), and where two of the tubular dam sections (10) are arranged side by side and being mutually fastened to each other via the multiple fastening eyes (12) arranged substantially equidistantly on the outside of the flanges (15) of each of the tubular dam sections (10) along the first line (13) or the second line (14), and where the third tubular dam section is stacked on top of, and between the two of the tubular dam sections (10), and where the third tubular dam section is fastened to the fastening eyes (12) on the third flange (20) of each of the two tubular dam sections via the fastening eyes (12) of third flange one of the two tubular dam sections (10) via the multiple fastening eyes (12) arranged substantially equidistantly on the flanges (15) on the outside of each of the third tubular dam section (10) along the first line (13) and the second line (14).

## Patentansprüche

1. Damm (1) zum Abschirmen von Wasser, wobei der Damm mindestens einen länglichen rohrförmigen Dammabschnitt (10) umfasst, der einen im Wesentlichen einheitlichen Umfang aufweist, wobei der rohrförmige Dammabschnitt (10) ein geschlossenes Volumen (6) definiert, das von mindestens einem Längsrohr eingeschlossen ist, das sich zwischen zwei Stirnflächen (5) erstreckt, die alle aus einem wasserdichten Gewebematerial gefertigt sind, wobei der mindestens eine längliche rohrförmige Dammabschnitt (10) eine Öffnung (11) umfasst, die in dem wasserdichten Gewebematerial angeordnet ist und zum Einfüllen und Entleeren von Flüssigkeit aus dem Volumen (6) konfiguriert ist, und wobei der längliche rohrförmige Dammabschnitt (10) mehrere Befestigungsmittel (12) aufweist, die im Wesentlichen in gleichem Abstand an der Außenseite des rohrförmigen Abschnitts entlang einer ersten Linie (13), die sich zwischen den zwei Stirnflächen (5) in die Längsrichtung des rohrförmigen Dammabschnitts (10) erstreckt, angeordnet sind, **dadurch gekennzeichnet, dass** der rohrförmige Dammabschnitt (10) mindestens zwei Öffnungen (11) umfasst, und wobei eine Öffnung in der Nähe von einer Stirnfläche (5) des rohrförmigen Dammabschnitts (10) angeordnet ist, und die andere Öffnung (11) in der Nähe von der gegenüberliegenden Stirnfläche (5) des rohrförmigen Dammabschnitts (10) angeordnet ist.

2. Damm nach Anspruch 1, **dadurch gekennzeichnet, dass** der rohrförmige Abschnitt (10) mehrere Befestigungsmittel (12) aufweist, die im Wesentlichen in gleichem Abstand an der Außenseite des rohrförmigen Abschnitts entlang einer zweiten Linie (14), die sich im Wesentlichen parallel zu der ersten Linie zwischen zwei Stirnflächen (5) und in der Längsrichtung des rohrförmigen Abschnitts erstreckt, angeordnet sind, und so, dass die erste (13) und die zweite (14) Linie das wasserdichte Gewebematerial des Längsrohrs in eine Oberseite und einen im Wesentlichen rechteckigen Abschnittsboden (2) unterteilen, dessen kürzeste Seite weniger als die Hälfte und vorzugsweise weniger als 40 % des Umfangs des Längsrohrs ist.

3. Damm nach Anspruch 1 oder 2, **dadurch gekennzeichnet, dass** mindestens einige der Befestigungsmittel Befestigungsösen (12) sind.

4. Damm nach Anspruch 3, **dadurch gekennzeichnet, dass** die Befestigungsmittel entlang der mindestens einen Linie durch einen Flansch (15) gebildet sind, der sich von dem rohrförmigen Damm (10) nach außen erstreckt, und wobei die Befestigungsösen (12) in gleichem Abstand entlang der Länge des rohrförmigen Abschnitts angeordnet sind.

5. Damm nach Anspruch 4, **dadurch gekennzeichnet, dass** sowohl die Befestigungsmittel entlang der ersten als auch der zweiten Linie jeweils durch einen Flansch (15) gebildet sind, der sich von dem rohrförmigen Abschnitt (10) nach außen erstreckt, und Befestigungsösen (16) aufweisen, die in gleichem Abstand entlang der Länge des rohrförmigen Abschnitts angeordnet sind, und wobei der rohrförmige Dammabschnitt (10) weiter einen dritten Flansch (20) umfasst, der im Wesentlichen parallel zu der ersten und der zweiten Linie angeordnet ist, sodass er die Oberseite in zwei Längsseitenflächen (4) unterteilt, die sich jeweils zwischen den zwei Stirnflächen (5) und zwischen dem dritten Flansch (20) und einem der Flansche (15) mit Befestigungsösen (12) erstrecken.

6. Damm nach Anspruch 5, **dadurch gekennzeichnet, dass** der dritte Flansch (20) auch Befestigungsösen (12) aufweist, die in gleichem Abstand entlang der Länge des rohrförmigen Dammabschnitts (10) angeordnet sind.

7. Damm nach einem oder mehreren der vorstehenden Ansprüche, **dadurch gekennzeichnet, dass** andere Befestigungsmittel (17) in der Nähe von jeder Stirnfläche angeordnet sind und zum Befestigen von einem Ende von einem der länglichen rohrförmigen Abschnitte (10) an einem Ende eines zweiten der länglichen rohrförmigen Dammabschnitte (10) angepasst sind.

8. Damm nach Anspruch 7, **dadurch gekennzeichnet, dass** die anderen Befestigungsmittel (17) Haken- und Schlingenbefestigungsmittel umfassen.

9. Damm nach einem oder mehreren der vorstehenden Ansprüche, **dadurch gekennzeichnet, dass** er mindestens 3 getrennte längliche rohrförmige Dammabschnitte (10) umfasst, und wobei ein erster und ein zweiter der länglichen rohrförmigen Dammabschnitte (10) so angeordnet sind, dass die Stirnfläche des ersten der länglichen rohrförmigen Abschnitte zu einer Stirnfläche des zweiten der länglichen rohrförmigen Abschnitte zeigt, und wobei der dritte der länglichen rohrförmigen Dammabschnitte (10) so angeordnet ist, dass er sich an einer Seite des ersten und des zweiten länglichen rohrförmigen Dammabschnitts (10) erstreckt.

10. Damm nach Anspruch 7 und 9, **dadurch gekennzeichnet, dass** der erste und der zweite längliche rohrförmige Dammabschnitt (10) über die anderen Befestigungsmittel, die in der Nähe von jeder Stirnfläche angeordnet sind, gegenseitig aneinander befestigt sind.

11. Damm nach Anspruch 9 oder 10, **dadurch gekennzeichnet, dass** der dritte längliche rohrförmige Dammabschnitt (10) so angeordnet ist, dass sich ein erster Teil davon parallel zu und entlang einer Seite des ersten länglichen rohrförmigen Dammabschnitts (10) erstreckt und sich der restliche Teil davon parallel zu und entlang einer Seite des zweiten länglichen rohrförmigen Dammabschnitts (10) erstreckt.

12. Damm nach Anspruch 11, **dadurch gekennzeichnet, dass** der dritte längliche rohrförmige Abschnitt an dem ersten und dem zweiten länglichen rohrförmigen Dammabschnitt (10) jeweils über die mehreren Befestigungsmittel (12) befestigt ist, die im Wesentlichen in gleichem Abstand an der Außenseite von jedem der rohrförmigen Dammabschnitte (10) entlang der ersten Linie (13) oder der zweiten Linie (14) angeordnet sind.

13. Damm nach einem oder mehreren von Anspruch 6 bis 8, **dadurch gekennzeichnet, dass** er mindestens einen ersten und einen zweiten rohrförmigen Dammabschnitt (10) umfasst, und wobei der erste rohrförmige Dammabschnitt (1) einen ausgewählten Abstand zwischen seinen Stirnflächen (5) aufweist und der zweite rohrförmige Dammabschnitt (10) einen Abstand zwischen seinen Stirnflächen (5) aufweist, der mindestens um 60 % und vorzugsweise um 100 % länger ist als der entsprechende Abstand zwischen den Stirnflächen (5) des ersten rohrförmigen Dammabschnitts.

14. Damm nach Anspruch 13, **dadurch gekennzeichnet, dass** er weiter einen dritten rohrförmigen Dammabschnitt (1) umfasst, der einen Abstand zwischen seinen Stirnflächen (5) aufweist, der mindestens um 100 % länger ist als der entsprechende Abstand zwischen den Stirnflächen (5) des zweiten rohrförmigen Dammabschnitts.

15. Damm nach einem oder mehreren von Anspruch 1 bis 8, **dadurch gekennzeichnet, dass** er mindestens 3 getrennte längliche rohrförmige Dammabschnitte (10) umfasst, und wobei zwei der rohrförmigen Dammabschnitte (10) nebeneinander angeordnet sind und über die mehreren Befestigungsösen (12), die im Wesentlichen in gleichem Abstand an der Außenseite der Flansche (15) von jedem der rohrförmigen Dammabschnitte (10) entlang der ersten Linie (13) oder der zweiten Linie (14) angeordnet sind, gegenseitig aneinander befestigt sind, und wobei der dritte rohrförmige Dammabschnitt über und zwischen den zwei der rohrförmigen Dammabschnitte (10) gestapelt ist, und wobei der dritte rohrförmige Dammabschnitt an den Befestigungsösen (12) an dem dritten Flansch (20) von jedem der zwei rohrförmigen Dammabschnitte über die Befestigungsösen (12) des dritten Flanschs eines von den zwei rohrförmigen Dammabschnitten (10) über die mehreren Befestigungsösen (12) befestigt ist, die im Wesentlichen in gleichem Abstand an den Flanschen (15) an der Außenseite von jedem des dritten rohrförmigen Dammabschnitts (10) entlang der ersten Linie (13) und der zweiten Linie (14) angeordnet sind.

## Revendications

1. Barrage (1) destiné à protéger de l'eau, le barrage comprenant au moins une section de barrage tubulaire allongée (10) présentant une circonférence sensiblement uniforme, la section de barrage tubulaire (10) définissant un volume fermé (6) enfermé par au moins un tube longitudinal s'étendant entre deux faces d'extrémité (5) toutes en un matériau en bande étanche à l'eau, la au moins une section de barrage tubulaire allongée (10) comprenant une ouverture (11) agencée dans le matériau en bande étanche à l'eau, et étant configuré pour le remplissage et le vidage de liquide au volume (6), et dans lequel la section de barrage tubulaire allongée (10) présente de multiples éléments de fixation (12) agencés sensiblement à équidistance sur l'extérieur de la section tubulaire le long d'une première ligne (13) s'étendant entre les deux faces d'extrémité (5) dans la direction longitudinale de la section de barrage tubulaire (10), **caractérisé en ce que** la section de barrage tubulaire (10) comprend au moins deux ouvertures (11), et dans lequel une ouverture est agencée à proximité d'une face d'extrémité (5) de la section de barrage tubulaire (10) et l'autre ouverture (11) est agencée à proximité de la face d'extrémité opposée (5) de la section de barrage tubulaire (10).

2. Barrage selon la revendication 1, **caractérisé en ce que** la section tubulaire (10) présente de multiples éléments de fixation (12) agencés sensiblement à équidistance sur l'extérieur de la section tubulaire le long d'une seconde ligne (14) s'étendant sensiblement parallèlement à la première ligne entre les deux faces d'extrémité (5) et dans la direction longitudinale de la section tubulaire, et de sorte que la première ligne (13) et la seconde ligne (14) divisent le matériau en bande étanche à l'eau du tube longitudinal en une face supérieure, et en une partie inférieure de section sensiblement rectangulaire (2) présentant sa longueur du côté le plus court étant inférieure à la moitié, et de préférence inférieure à 40 %, de la circonférence du tube longitudinal.

3. Barrage selon la revendication 1 ou 2, **caractérisé en ce qu'**au moins certains des éléments de fixation sont des oeillets de fixation (12).

4. Barrage selon la revendication 3, **caractérisé en ce que** les éléments de fixation le long de la au moins une ligne sont formés par un rebord (15) s'étendant vers l'extérieur depuis le barrage tubulaire (10), et présentant les oeillets de fixation (12) agencés à équidistance sur la longueur de la section tubulaire.

5. Barrage selon la revendication 4, **caractérisé en ce que** tant les éléments de fixation le long de la première ligne que les éléments de fixation le long de la seconde ligne sont chacun formés par un rebord (15) s'étendant vers extérieur depuis la section tubulaire (10), et présentant des oeillets de fixation (16) agencés à équidistance sur la longueur de la section tubulaire, et dans lequel la section de barrage tubulaire (10) comprend en outre un troisième rebord (20) agencé sensiblement parallèlement aux première et seconde lignes, de sorte qu'il divise la face supérieure en deux faces latérales longitudinales (4) s'étendant chacune entre les deux faces d'extrémité (5) et entre le troisième rebord (20) et l'un des rebords (15) avec des oeillets de fixation (12).

6. Barrage selon la revendication 5, **caractérisé en ce que** le troisième rebord (20) présente également des oeillets de fixation (12) agencés à équidistance sur la longueur de la section de barrage tubulaire (10).

7. Barrage selon une ou plusieurs des revendications précédentes, **caractérisé en ce que** d'autres éléments de fixation (17) sont agencés à proximité de chaque face d'extrémité, et étant adaptés pour fixer une quelconque extrémité d'une desdites sections tubulaires allongées (10) à une quelconque extrémité d'une deuxième desdites sections de barrage tubulaires allongées (10).

8. Barrage selon la revendication 7, **caractérisé en ce que** les autres éléments de fixation (17) comprennent des fermetures auto-agrippantes.

9. Barrage selon une ou plusieurs des revendications précédentes, **caractérisé en ce qu'**il comprend au moins 3 sections distinctes de barrage tubulaires allongées (10), et dans lequel une première et une deuxième des sections de barrage tubulaires allongées (10) sont agencées de sorte que la face d'extrémité de la première des sections tubulaires allongées soit orientée vers une face d'extrémité de la deuxième des sections tubulaires allongées, et dans lequel la troisième des sections de barrage tubulaires allongées (10) est agencée de sorte qu'elle s'étende sur un côté des première et deuxième sections de barrage tubulaires allongées (10).

10. Barrage selon la revendication 7 et 9, **caractérisé en ce que** les première et deuxième sections de barrage tubulaires allongées (10) sont fixées mutuellement l'une à l'autre par l'intermédiaire des autres éléments de fixation agencés à proximité de chaque face d'extrémité.

11. Barrage selon la revendication 9 ou 10, **caractérisé en ce que** la troisième section de barrage tubulaire allongée (10) est agencée de sorte qu'une première partie de celle-ci s'étende parallèlement à et le long d'un côté de la première section de barrage tubulaire allongée (10), et que la partie restante de celle-ci s'étende parallèlement à et le long d'un côté de la deuxième section de barrage tubulaire allongée (10).

12. Barrage selon la revendication 11, **caractérisé en ce que** la troisième section tubulaire allongée est fixée aux première et deuxième sections de barrage tubulaires allongées (10) respectivement par l'intermédiaire des multiples éléments de fixation (12) agencés sensiblement à équidistance sur l'extérieur de chacune des sections de barrage tubulaires (10) le long de la première ligne (13) ou de la seconde ligne (14).

13. Barrage selon une ou plusieurs de la revendication 6 à 8, **caractérisé en ce qu'**il comprend au moins des première et deuxième sections de barrage tubulaires (10), et dans lequel la première section de barrage tubulaire (1) présente une distance choisie entre ses faces d'extrémité (5), et la deuxième section de barrage tubulaire (10) présente une distance entre ses faces d'extrémité (5) étant au moins 60 % et de préférence 100 % plus longue que la distance correspondante entre les faces d'extrémité (5) de la première section de barrage tubulaire.

14. Barrage selon la revendication 13, **caractérisé en ce qu'**il comprend en outre une troisième section de barrage tubulaire (1) présentant une distance entre ses faces d'extrémité (5) étant au moins 100 % plus longue que la distance correspondante entre les faces d'extrémité (5) de la deuxième section de barrage tubulaire.

15. Barrage selon une ou plusieurs des revendications 1 à 8, **caractérisé en ce qu'**il comprend au moins 3 sections distinctes de barrage tubulaires allongées (10), et dans lequel deux des sections de barrage tubulaires (10) sont agencées côte à côte et étant mutuellement fixées l'une à l'autre par l'intermédiaire des multiples oeillets de fixation (12) agencés sensiblement à équidistance sur l'extérieur des rebords (15) de chacune des sections de barrage tubulaires (10) le long de la première ligne (13) ou de la seconde ligne (14), et dans lequel la troisième section de barrage tubulaire est empilée au-dessus de, et entre les deux des sections de barrage tubulaires (10), et dans lequel la troisième section de barrage tubulaire est fixée aux oeillets de fixation (12) sur le troisième rebord (20) de chacune des deux sections de barrage tubulaires par l'intermédiaire des oeillets de fixation (12) du troisième rebord, l'une des deux sections de barrage tubulaires (10) par l'intermédiaire des multiples oeillets de fixation (12) agencés sensiblement à équidistance sur les rebords (15) sur l'extérieur de chacune de la troisième section de barrage tubulaire (10) le long de la première ligne (13) et de la seconde ligne (14).
